# EUROPÄISCHE PATENTSCHRIFT

(11) **EP 0 569 346 B1**
(45) Veröffentlichungstag und Bekanntmachung des Hinweises auf die Patenterteilung: **29.01.1997**
(21) Anmeldenummer: 93890084.2
(22) Anmeldetag: 26.04.1993
(51) Int. Cl.: B32B 15/01, C22C 38/22, C22C 38/24, C22C 38/30

(54) **Metallsägeblatt mit hoher Biegewechselfestigkeit und hoher Schnittleistung**
Hack saw blade with improved fatique strength under reversed bending stresses and improved cutting performance
Lame de scies à métaux, à haute résistance à la flexion alternée à haute performance de coupe

(30) Priorität: 06.05.1992 AT 919/92
(43) Veröffentlichungstag der Anmeldung: 10.11.1993
(73) Patentinhaber: BÖHLER YBBSTALWERKE Ges.m.b.H., A-3333 Böhlerwerk (AT)
(72) Erfinder: Döberl, Dieter, Dipl.-Ing., A-3333 Böhlerwerk (AT); Pacher, Oskar, Dr., W-8041 Graz (AT); Daxelmüller, Manfred, Dipl.-Ing., A-3340 Waidhofen (AT); Leban, Karl, Dipl.-Ing., A-2700 Wiener Neustadt (AT)
(74) Vertreter: Brauneiss, Leo, Dipl.Ing.

(56) Entgegenhaltungen:
- EP-A- 0 078 254
- EP-A- 0 319 511
- EP-A- 0 452 526
- DE-U- 9 211 285
- FR-A- 2 374 159
- US-A- 2 683 923
- US-A- 4 058 650

## Beschreibung

Die Erfindung betrifft ein Metallsägeblatt, insbesondere Metallsägeband, mit hoher Biegewechselfestigkeit und hoher Schnittleistung, bestehend aus einem Trägerband aus einer im wesentlichen die Bestandteile Kohlenstoff, Silizium, Mangan, Chrom, Molybdän, Vanadin, gegebenenfalls Nickel, Wolfram, Aluminium und Stickstoff sowie erschmelzungsbedingte Verunreinigungen und Begleitelemente, Rest Eisen aufweisenden Legierung und aus einem mit diesem zusatzwerkstoffrei, insbesondere mittels Elektronenstrahles oder Plasmas, verschweißten, zumindest die Zahnspitze bildenden Schneidteil aus einem Werkstoff, enthaltend im wesentlichen die Legierungselemente Kohlenstoff, Silizium, Mangan, Chrom, Molybdän, Vanadin, Wolfram, gegebenenfalls Kobalt, Titan, Niob, Aluminium und Stickstoff.

Metallsägeblätter oder Metallsägebänder, welche im praktischen Einsatz eine hohe Standzeit bzw. eine lange Lebensdauer aufweisen sollen, werden zumeist aus Rohblättern bzw. Rohbändern, welche aus zwei Komponenten aus unterschiedlichen Legierungen, die miteinander verschweißt sind, bestehen, gefertigt. Diese Komponenten-Ausführungsform für Sägen wird hauptsächlich deshalb gewählt, weil die Stützkomponente bzw. das Trägerband im wesentlichen wechselnd auf Biegung beansprucht wird, daher vorteilhafterweise aus einem Werkstoff mit hoher Biegewechselfestigkeit besteht, hingegen die Schneidkomponente bzw. der Schneidteilwerkstoff eine hohe Schneidhaltigkeit aufweisen muß und daher aus Schneidstählen oder Schnellstahl, welche eine große Härte, jedoch eine geringe Biegewechselfestigkeit haben, hergestellt ist.

Ein Verschweißen der Komponententeile erfolgt ohne Zusatzwerkstoff, das heißt, die Stirnfläche des Stütz- oder Trägerbandes und die korrespondierende Fläche der Schneidkomponente bzw. des Schneidteiles werden durch Energieeinbringung, insbesondere durch Elektronen- Plasma - oder Laserstrahl verflüssigt, zusammengefügt und die Schmelzzonen erstarren gelassen. Nach dem Verschweißen wird der Verbundteil weichgeglüht und zu einem Rohband gewalzt, wonach insbesondere unter materialabtragender Bearbeitung stirnseitig die Sägezähne aus dem Schneidteilbereich ausgeformt werden.

Je nach Sägeart werden die Rohblätter mit verschieden breitem Schneidteil eingesetzt oder unterschiedliche Zahnarten gebildet, so daß entweder das gesamte Zahnprofil im Schneidteil zu liegen kommt, oder insbesondere nur die Zahnspitzen aus Schneidteilwerkstoff bestehen, weil die Zahnhöhe, das ist die Erstreckung zwischen Zahnspitze und Zahngrund, größer als die Schneidkomponentenbreite ist. Zur Einstellung der geforderten Materialeigenschaften wird das erstellte Sägeband einer Wärmebehandlung mit einem Austenitisieren, Härten bzw. Abschrecken und einem mindestens einmal durchzuführenden Anlassen unterworfen, wobei das Material der Stützkomponente bzw. das Trägerband hohe Biegewechselfestigkeit und der Zahnspitzenwerk- stoff hohe Härte und Abriebfestigkeit erhalten sollen.

Beim Aneinanderschweißen der Komponenten aus den unterschiedlich zusammengesetzten Legierungen entsteht in der Schweißnaht ein Übergang mit unterschiedlichen örtlichen Konzentrationen der Elemente. In diesem Übergang können spröde Bereiche bei der Schweißung und/oder bei der Wärmebehandlung legierungstechnisch oder durch Diffusionserscheinungen entstehen, wodurch ein Abbrechen der Schneidkomponente oder der Zahnspitzen vom Trägerteil erfolgen kann. Es wurde schon versucht, eine Erhöhung der Zähigkeit des Trägerbandwerkstoffes, insbesondere im Schweißnahtbereich durch Legieren mit stark karbidbildenden Elementen wie Niob zu erreichen und eine Kohlenstoffdiffusion durch genau einzuhaltende enge Grenzen von oberem und unterem Chromgehalt weitgehend zu verhindern ( EP-A- 0452526, US-PS 4058650). Dadurch konnten zwar Verbesserungen erreicht werden, bei einigen Schneidwerkstoffen war jedoch eine Versprödung des Schweißnahtbereiches nicht im ausreichenden Maß zu verhindern oder eine Verschweißung schwierig und mit schlechten Ergebnissen durchzuführen.

Der Erfindung liegt die Aufgabe zugrunde, ein Metallsägeblatt, insbesondere ein Metallsägeband, anzugehen, welches aus einem Trägerband und einem mit diesem zusatzwerkstoffrei verschweißten Schneidteil gebildet ist, hohe Biegewechselfestigkeit und hohe Schnittleistung und auch bei Anwendung unterschiedlicher Schweißparameter sowie bei zeitaufwendigen und/oder oftmaligen Wärmebehandlungen eine hohe Festigkeit und Zähigkeit über den gesamten Querschnitt der Verbindung bzw. Schweißzone aufweist Diese Aufgabe wird bei einer Metallsäge dar eingangs genannten Art dadurch erreicht, daß das Trägerband eine Zusammensetzung von in Gew.-%
- 0,20: bis 0,4 C
- 2,5: bis 5,0 Cr
- 2,0: bis 3,0 Mo
- 0,03: bis 0,4 V
bis 0,15 Al
bis 1,0 Si
bis 1,5 Mn
bis 1,1 Ni
bis 4,2 Co
ggf. W und N
Rest Eisen und erschmelzungsbedingte Verunreinigungen aufweist mit der Maßgabe, daß die Konzentrationen von Nb und Ti unter 0,01 Gew.-% liegen, welches Trägerband mit einem Schneidteil verschweißt ist, welcher eine Zusammensetzung von in Gew.-%
- 0,65: bis 1,8 C
- 3,0: bis 6,0 Cr
- 4,0: bis 12,0 Mo
- 0,5: bis 5,0 V
bis 12,0 W
bis 12,0 Co
bis 2,0 Al
bis 1,0 Si
bis 1,0 Mn
bis 0,1 N
ggf. Ti und Nb
Rest Eisen und erschmelzungsbedingte Verunreinigungen aufweist.

Dabei werden synergetisch eine legierungstechnische Abstimmung der Werkstoffe der beiden Komponenten bzw. des Trägerbandes und des Schneidteiles aufeinander im Aufmischungsbereich der Schweißzone erreicht und bei einer in weiten Parametergrenzen variierbarer Herstelltechnologie überragende Gebrauchseigenschaften und Standzeiten von Sägeblättern und Sägebändern bewirkt.

Wenn weiters in günstiger Weise vorgesehen, das Trägerband Gehalte von in Gew.-%
- 0,25: bis 0,35 C
- 2,8: bis 4,5 Cr
- 2,4: bis 2,8 Mo
- 0,04: bis 0,3 V
- 0,01: bis 0,1 Al
aufweist, so ist eine besonders hohe Biegewechselfestigkeit des Werkstoffes gegeben.

Wenn, wie gemäß einer weiteren Variante vorgesehen, der Schneidteil Gehalte von in Gew.-%
- 0,8: bis 1,5 C
- 3,5: bis 4,5 Cr
- 7,2: bis 11,2 Mo
- 0,7: bis 1,4 V
bis 1,0 Al
aufweist, sind besonders hohe Schnittleistungen erreichbar.

Besonders gute Schneideigenschaften werden erreicht, wenn der Schneidteil Gehalte von in Gew.-%
- 1,0: bis 1.15 C
bis 0,5 Si
bis 0,5 Mn
- 3,5: bis 4,2 Cr
- 9,0: bis 9,8 Mo
- 1,0: bis 1,5 V
- 1,2: bis 1,8 W
- 7,0: bis 8,5 Co
- 0,015: bis 0,065 N
aufweist.

Sowohl für eine Herstellung als auch für beste Gebrauchseigenschaften hat es sich als besonders vorteilhaft herausgestellt, wenn die Konzentrationen der Legierungselemente Kohlenstoff, Vanadin und Molybdän im Trägerband und im damit verschweißten Schneidteil ein Verhältnis von 1 zu 3 bis 1 zu 4 aufweisen.

Das Eigenschaftsniveau kann weiters erhöht werden, wenn die Konzentration von Aluminium im Trägerband und im damit verschweißten Schneidteil ein Verhältnis von 1 zu 8 bis 1 zu 16 aufweist.

Es hat sich als vorteilhaft im Hinblick auf eine qualitativ hochwertige Verschweißung des Trägerbandes mit dem Schneidteil herausgestellt, wenn zumindest die Legierungselemente Chrom, Vanadin und Molybdän in beiden Werkstoffen vorhanden sind, wobei der Schneidteil eine Mindestkonzentration von 4,0 Gew.-% Mo aufweisen muß, um besonders gute Dauerwechseleigenschaften der Verbindung zu bewirken. Weiters hat sich überraschend gezeigt, daß die bisher vielfach als Kornfeinungsmittel zur Verbesserung der mechanischen Werkstoffeigenschaften zulegierten Elemente Niob und Titan die Biegewechselfestigkeit eines Trägerbandes nachteilig beeinflussen, so daß deren Maximalgehalte von 0,01 Gew.-% keinesfalls überschritten werden sollen. Durch ein Zulegieren von Aluminium, insbesondere zu beiden Komponenten des Sägebandes, werden die Schweißeigenschaften des(der) Materials ( Materialien) und das Anlaßverhalten, insbesondere in der Schweiß- bzw. Aufmischzone, weiter verbessert.

Wenn, gemäß einer weiteren bevorzugten Ausführungsform, der Schneidteil aus einer Molybdän-Schnellstahllegierung gebildet ist, sind besonders gute Schnittleistungen des Sägewerkzeuges erzielbar.

Beste mechanische Eigenschaften auch bei Dauerwechselbeanspruchung, insbesondere in der Schweißnaht eines Sägebandes im Betrieb, werden erreicht, wenn die Elemente Kohlenstoff, Vanadin und Molybdän in den Komponenten in einem bestimmten Verhältnis ihrer Konzentrationen zueinander stehen, weil dadurch, wie gefunden wurde, keinerlei nachteilig wirkende Diffusionserscheinungen auch bei langen Glühzeiten auftreten. Obwohl ein Aluminiumgehalt einer Legierung deren Verschweißbarkeit bzw. eine Schweißnahtqualität auf Grund einer hohen Sauerstoffaffinität von Aluminium und damit einer Neigung zur Bildung von Oxidhäuten und Einschlüssen nachteilig beeinflußt, wurde ein besonders gutes Schweißfließen der beiden Werkstoffe trotz unterschiedlich hoher Schmelzpunkte gefunden.

Im folgenden wird die Erfindung anhand von Beispielen näher erläutert. ein Trägerband A, A1 und ein Schneidteil B, B1 wurden mittels Elektronenstrahlschweißung verbunden und daraus jeweils ein Sägeband S1 bis S4 gefertigt.

### Werkstoffzusammensetzungen:

| | C | Si | Mn | Cr | Mo | Ni | V | W | Co | Al | Ti | Nb |
|---|---|---|---|---|---|---|---|---|---|---|---|---|
| A | 0,31 | 0,49 | 0.94 | 3,2 | 2,62 | 0,51 | 0,38 | | | 0,07 | 0,006 | 0.003 |
| A1 | 0,36 | 0,15 | 0,48 | 4,32 | 1,39 | 0,55 | 0,18 | 1,14 | 0,21 | | | 0,04 |
| B | 1,13 | 0,23 | 0,19 | 3,98 | 9,27 | 0,31 | 1,23 | 1,34 | 7,8 | 0,02 | | 0,014 |
| B1 | 0,91 | 0,18 | 0,22 | 4,3 | 4,73 | 0,21 | 1,92 | 6,1 | 0,4 | | | |

- Sägeband: S1 bestehend aus A + B
S2 bestehend aus A + B1
S3 bestehend aus A1+ B
S4 bestehend aus A1+ B1

Die Einsatzdauer des Sägebandes S1 beim Schneiden von Warmarbeitsstahlknüppeln der Stahlmarke nach DIN Werkstoff Nr. 1.2367 wurde mit 100 % angesetzt. Mit S2 konnten 61 % Einsatzdauer erreicht werden, wonach die Schneidleistung unbefriedigend und einzelne Zähne an der Schweißnaht abgebrochen waren. S3 erbrachte eine Einsatzdauer von 78 %. Ausfallsursache war ein Ausbrechen der Zahnspitzen, die jedoch noch ausreichend scharfe Schneidkanten aufwiesen. S4 fiel nach 32 % Einsatzdauer wegen Ermüdungsausbruches des Trägerbandes aus.

Beispiele S3 und S4 gehören nicht zur Erfindung.

## Patentansprüche

1. Metallsägeblatt, insbesondere Metallsageband, mit hoher Biegewechselfestigkeit und hoher Schnittleistung, bestehend aus einem Trägerband und aus einem mit diesem zusatzwerkstoffrei, insbesondere mittels Elektronenstrahles oder Plasma, verschweißten, zumindest die Zahnspitze bildenden Schneidteil, wobei das Tragerband eine Zusammensetzung von in Gew.-%
0,20 bis 0,4 C
2,5 bis 5,0 Cr
2,0 bis 3.0 Mo
0,03 bis 0,4 V
bis 0,15 Al
bis 1,0 Si
bis 1,5 Mn
bis 1,1 Ni
weniger als 0.01 Nb + Ti
ggf. W und N
bis 4,2 Co
Rest Eisen und erschmelzungsbedingte Verunreinigungen aufweist, welches Trägerband mit einem Schneidteil verschweißt ist, welcher eine Zusammensetzung von in Gew.-%
0,65 bis 1,8 C
3,0 bis 6,0 Cr
4,0 bis 12,0 Mo
0,5 bis 5,0 V
bis 12,0 W
bis 12,0 Co
bis 2,0 Al
bis 1,0 Si
bis 1,0 Mn
bis 0,1 N
ggf. Ti und Nb
Rest Eisen und erschmelzungbedingte Verunreinigungen aufweist.

2. Metallsägeblatt nach Anspruch 1, dadurch gekennzeichnet, daß das Trägerband Gehalte von in Gew.-%
0,25 bis 0,35 C
2,8 bis 4,5 Cr
2,4 bis 2,8 Mo
0,04 bis 0,3 V
0,01 bis 0,1 Al
aufweist.

3. Metallsägeblatt nach Anspruch 1 oder 2, dadurch gekennzeichnet, daß der Schneidteil Gehalte von in Gew.-%
0,8 bis 1,5 C
3,5 bis 4,5 Cr
7,2 bis 11,2 Mo
0,7 bis 1,4 V
bis 1,0 Al
aufweist.

4. Metallsägeblatt nach einem der Ansprüche 1 bis 3, dadurch gekennzeichnet, daß der Schneidteil Gehalte von in Gew.-%
1,0 bis 1,15 C
bis 0,5 Si
bis 0,5 Mn
3,5 bis 4,2 Cr
9,0 bis 9,8 Mo
1,0 bis 1,5 V
1,2 bis 1,8 W
7,0 bis 8,5 Co
0,015 bis 0,065 N
aufweist.

5. Metallsägeblatt nach einem der Ansprüche 1 bis 4, dadurch gekennzeichnet, daß die Konzentrationen der Legierungselemente Kohlenstoff, Vanadin und Molybdän im Trägerband und im damit verschweißten Schneidteil ein Verhältnis von 1 zu 3 bis 1 zu 4 aufweisen.

6. Metallsägeblatt nach einem der Ansprüche 1 bis 4, dadurch gekennzeichnet, daß die Konzentration von Aluminium im Trägerband und im damit verschweißten Schneidteil ein Verhältnis von 1 zu 8 bis 1 zu 16 aufweist.

## Claims

1. A hacksaw blade, in particular a hacksaw band, with high fatigue strength under reversed bending stresses and high cutting performance, comprising a supporting band and a cutting part forming at least the tooth tip and welded to the supporting band without the use of a filler metal, in particular by means of an electron beam or plasma, wherein the supporting band has a composition of, in wt.% :
0.20 to 0.4 C
2.5 to 5.0 Cr
2.0 to 3.0 Mo
0.03 to 0.4 V
up to 0.15 Al
up to 1.0 Si
up to 1.5 Mn
up to 1.1 Ni
less than 0.01 Nb + Ti
optionally W and N
up to 4.2 Co
the remainder iron and impurities caused by melting,
the supporting band being welded to a cutting part having a composition of, in wt.% :
0.65 to 1.8 C
3.0 to 6.0 Cr
4.0 to 12.0 Mo
0.5 to 5.0 V
up to 12.0 W
up to 12.0 Co
up to 2.0 Al
up to 1.0 Si
up to 1.0 Mn
up to 0.1 N
optionally Ti and Nb
the remainder iron and impurities caused by melting.

2. A hacksaw blade according to claim 1, characterised in that the supporting band contains, in wt.% :
0.25 to 0.35 C
2.8 to 4.5 Cr
2.4 to 2.8 Mo
0.04 to 0.3 V
0.01 to 0.1 Al

3. A hacksaw blade according to claim 1 or 2, characterised in that the cutting part contains, in wt.% :
0.8 to 1.5 C
3.5 to 4.5 Cr
7.2 to 11.2 Mo
0.7 to 1.4 V
up to 1.0 Al

4. A hacksaw blade according to any one of claims 1 to 3, characterised in that the cutting part contains, in wt.% :
1.0 to 1.15 C
up to 0.5 Si
up to 0.5 Mn
3.5 to 4.2 Cr
9.0 to 9.8 Mo
1.0 to 1.5 V
1.2 to 1.8 W
7.0 to 8.5 Co
0.015 to 0.065 N

5. A hacksaw blade according to any one of claims 1 to 4, characterised in that the concentrations of the alloying elements carbon, vanadium and molybdenum in the supporting band and in the cutting part welded thereto are in a ratio of 1 : 3 to 1 : 4.

6. A hacksaw blade according to any one of claims 1 to 4, characterised in that the concentration of aluminium in the supporting band and in the cutting part welded thereto is in a ratio of 1 : 8 to 1 : 16.

## Revendications

1. Lame de scie à métaux, notamment ruban de scie à métaux présentant une résistance élevée à la flexion alternée et une grande puissance de coupe, constituée par une bande de support et par une partie de coupe, qui est soudée à la bande de support sans matériau additionnel, notamment à l'aide d'un faisceau d'électrons ou d'un plasma, et constitue la pointe d'une dent, la bande de support possédant une composition comprenant, en % en poids,
0,20 à 0,4 C
2,5 à 5,0 Cr
2,2 à 3,0 Mo
0,03 à 0,4 V
jusqu'à 0,15 Al
jusqu'à 1,0 Si
jusqu'à 1,5 Mn
jusqu'à 1,1 Ni
moins de 0,01 Nb+Ti
jusqu'à 4,2 Co
éventuellement W et N
le reste comprenant du fer et des impuretés dues au traitement d'élaboration, laquelle bande de support est soudée à une partie de coupe, qui possède une composition comprenant, en % en poids,
0,65 à 1,8 C
3,0 à 6,0 Cr
4,0 à 12,0 Mo
0,5 à 5,0 V
jusqu'à 12,0 W
jusqu'à 12,0 Co
jusqu'à 2,0 Al
jusqu'à 1,0 Si
jusqu'à 1,0 Mn
jusqu'à 0,1 N
éventuellement Ti et Nb,
le reste comprenant du fer et des impuretés dues au traitement d'élaboration.

2. Lame de scie à métaux selon la revendication 1, caractérisée en ce que la bande de support contient des teneurs, en % en poids, de
0,25 à 0,35 Cr
2,8 à 4,5 Cr
2,4 à 2,8 Mo
0,04 à 0,3 V
0,01 à 0,1 Al.

3. Lame de scie à métaux selon la revendication 1 ou 2, caractérisée en ce que la partie de coupe comporte des teneurs, en % en poids, de
0,8 à 1,5 C
3,5 à 4,5 Cr
7,2 à 11,2 Mo
0,7 à 1,4 V
jusqu'à 1,0 Al.

4. Lame de scie à métaux selon l'une des revendications 1 à 3, caractérisée en ce que la partie de coupe contient des teneurs, en % en poids, de
1,0 à 1,15 C
jusqu'à 0,5 Si
jusqu'à 0,5 Mn
3,5 à 4,2 Cr
9,0 à 9,8 Mo
1,0 à 1,5 V
1,2 à 1,8 W
7,0 à 8,5 Co
0,015 à 0,065 N.

5. Lame de scie à métaux selon l'une des revendications 1 à 4, caractérisée en ce que les concentrations des éléments d'alliage carbone, vanadium et molybdène dans la bande de support et dans la bande de coupe, qui est soudée à la bande de support, sont dans un rapport de 1 à 3 à 1 à 4.

6. Lame de scie à métaux selon l'une des revendications 1 à 4, caractérisée en ce que les concentrations d'aluminium dans la bande de support et dans la partie de coupe soudée à la bande de support, sont dans un rapport de 1 à 8 à 1 à 16.
